# EUROPEAN PATENT APPLICATION

(11) **EP 3 000 313 A1**
(43) Date of publication of application: **30.03.2016**
(21) Application number: 15185060.9
(22) Date of filing: 14.09.2015
(51) Int. Cl.: A01G 3/025, A01G 3/037

(54) **ELECTRICALLY-DRIVEN PRUNING SHEARS**

(30) Priority: 29.09.2014 KR 20140130208
(71) Applicant: Kim, Jaejung, Jeonju-si 561-787 (KR)
(72) Inventor: Kim, Jaejung, Jeonju-si 561-787 (KR)
(74) Representative: Jordan, Volker Otto Wilhelm

(57) **Abstract**

Electrically-driven pruning shears according to the present invention are characterized in comprising: a cutting unit 100 which automatically performs a cutting operation through a sensor module 101; a tilting unit 200 which is extended from the cutting unit and performs a tilting operation of the cutting unit according to a manipulation by a user; a shaft 300 which is extended from the tilting unit and on which a tilting control lever for controlling the tilting operation of the tilting unit is formed; and a control unit 400 which controls the cutting operation of the cutting unit and controls an emergency stop of the cutting unit, wherein, in the shaft 300, a plurality of pipe having diameters of different sizes are connected to each other in a telescopic manner, and a length of the shaft is adjusted by a length adjusting means 310.

## Description

### BACKGROUND OF THE INVENTION

### 1. Field of the Invention

The present invention relates to electrically-driven pruning shears.

And, more specifically, the present invention relates to electrically-driven pruning shears comprising: a cutting unit 100 which automatically performs a cutting operation through a sensor module 101; a tilting unit 200 which is extended from the cutting unit and performs a tilting operation of the cutting unit according to a manipulation by a user; a shaft 300 which is extended from the tilting unit and has an adjustable length; and a control unit 400 which controls the cutting unit such that the cutting unit is automatically operated.

### 2. Description of the Related Art

Generally, pruning shears are tools used in maintaining fruit trees, forest trees, and flowering plants, landscaping, and pruning trees. These pruning shears are configured such that an operator manually manipulates them to prune objects.

By the way, since the pruning shears are manipulated manually, an operation time for the pruning operation increases and fatigue of the operator also accumulates.

Also, the conventional pruning shears are designed such that the operator can grip them in his/her hands during operation, which is cumbersome since the operator requires other tools such as ladders in order to arrive at a site that is out of the operator's reach, and causes safety problems due to the usage of the ladders.

Accordingly, pruning shears which can easily prune objects located out of the range of the operator's reach have been developed in order to solve the above problems, and Korean utility model publication No. 20-2013-0002783 discloses a pruning tool for high places having a rotatable cutting unit.

This disclosure relates to a pruning tool for high places having a rotatable cutting unit which is tilted left or right by predetermined angles such that twigs located at corners can be quickly and efficiently pruned.

However, since these pruning shears should perform the pruning operation through a manually-driven driving unit for the cutting unit, it cannot solve the problem related to the fatigue of the operator during the pruning operation.

Also, since a configuration for rotating the cutting unit is positioned close to the cutting unit, it is not possible to quickly rotate the cutting unit during the pruning operation, and it can adversely affect the fatigue during the pruning operation.

In the meantime, the applicants have filed and were granted on pruning shears which can minimize fatigue during the pruning operation.

The technology developed by the applicants is described in Korean patent registration No. 10-1306959.

The described technology relates to automatic pruning shears made of a carbon fiber which automatically drive a pruning shear unit by rotating a cam gear unit, a worm gear unit, and a main gear unit by a motor unit and enable the pruning shears to prune an upper portion by rotating the pruning shears by 90 degrees.

However, since the above-described technology does not describe a configuration for adjusting a length, the upper portion referred to in the disclosure is a top portion (upper portion) within a range of the height of the operator, and the operator should use separate tools (such as ladders) in order to prune a portion higher than his/her height, which cannot solve the problems incurred by the separate tools.

Therefore, a technological device, which can facilitate a pruning operation and minimize the fatigue of the operator during the pruning operation by automatically driving the pruning shears, performing a tilting operation on the pruning shears, and adjusting the length of the pruning shears, is highly required.

### Cited References

### Patent References

(Patent Reference 1) Korean utility model publication No. 20-2013-0002783 (Publication Date: May. 8, 2013)
(Patent Reference 2) Korean patent registration No. 10-1306959 (Registration Date: Sep. 3, 2013)

### SUMMARY OF THE INVENTION

The present invention is contrived in order to meet the above requirements, and an objective to be obtained according to the present invention is to provide electrically-driven pruning shears comprising: a cutting unit 100 which automatically performs a cutting operation through a sensor module 101; a tilting unit 200 which is extended from the cutting unit and performs a tilting operation of the cutting unit according to a manipulation by a user; a shaft 300 which is extended from the tilting unit and has an adjustable length; and a control unit 400 which controls the cutting unit such that the cutting unit is automatically operated.

In order to obtain the technical objective of the present invention, the electrically-driven pruning shears according to the present invention are characterized in comprising: a cutting unit 100 which automatically performs a cutting operation through a sensor module 101; a tilting unit 200 which is extended from the cutting unit and performs a tilting operation of the cutting unit according to a manipulation by a user; a shaft 300 which is extended from the tilting unit and on which a tilting control lever for controlling the tilting operation of the tilting unit is formed; and a control unit 400 which controls the cutting operation of the cutting unit and controls an emergency stop of the cutting unit, wherein, in the shaft 300, a plurality of pipe having diameters of different sizes are connected to with each other in a telescopic manner, and a length of the shaft is adjusted by a length adjusting means 310.

The electrically-driven pruning shears according to the present invention can automatically perform a cutting operation of the cutting unit through a sensor and quickly perform a tilting operation of the tilting unit, and, therefore can mitigate the fatigue of the operator during the pruning operation.

Also, since the shaft is configured such that the length is adjustable, even when the operator's height is not sufficient, the operator can perform the pruning operation without using separate tools such as ladders, and, therefore man power and fatigue required for the process can be reduced, and the overall pruning operation can be facilitated.

### BRIEF DESCRIPTION OF THE DRAWINGS

FIG. 1 schematically shows a configuration of the electrically-driven pruning shears according to the present invention;
FIG. 2 schematically shows a configuration of a cutting unit of the electrically-driven pruning shears according to the present invention;
FIG. 3 schematically shows a configuration of a tilting unit of the electrically-driven pruning shears according to the present invention;
FIG. 4 shows an example of the operation of the tilting unit of the electrically-driven pruning shears according to the present invention;
FIG. 5 schematically shows a configuration of a shaft of the electrically-driven pruning shears according to the present invention;
FIG. 6 schematically shows a configuration of a control unit of the electrically-driven pruning shears according to the present invention; and
FIG. 7 schematically shows a configuration of a wearing portion of the electrically-driven pruning shears according to the present invention.

### DETAILED DESCRIPTION OF THE INVENTION

The terminologies and words used in the specification and the claims are not to be construed to be limited to conventional or lexical meanings, but to be interpreted as having meanings and concepts that correspond to the technical spirit of the present invention based on the principal that inventors can define concepts of the terminologies as appropriate for describing their inventions in the best manner.

Therefore, it is to be understood that since the configurations described in the specification and shown in the figures are only the most preferred embodiments and do not encompass all of the technical spirit of the present invention, there can be various equivalents and modified examples which can replace those configurations at the time of filing.

In the below prior to the description with reference to the figures, it is to be noted that items, that are not required to disclose the subject matter of the present invention, that is, known configurations which can be apparently added by the person having ordinary skill in the art, are neither shown nor described in detail.

The present invention relates to electrically-driven pruning shears.

The present invention is described below by referring to the appended figures.

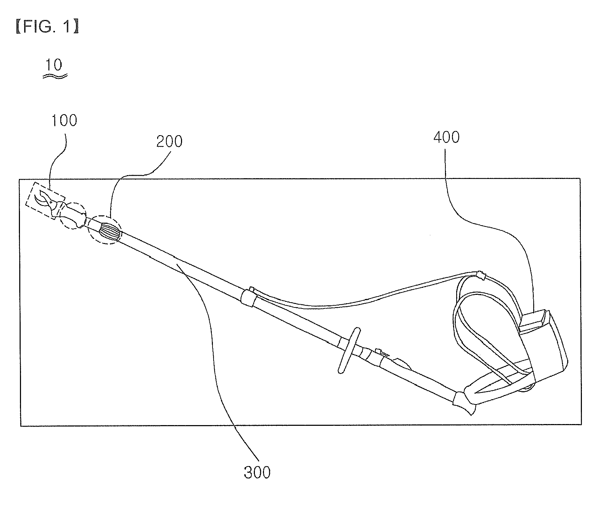

FIG. 1 schematically shows a configuration of the electrically-driven pruning shears according to the present invention.

The electrically-driven pruning shears ("pruning shears 10", hereinafter) according to the present invention as shown in the appended FIG. 1 can mainly include a cutting unit 100, a tilting unit 200, a shaft 300 and a control unit 400.

The cutting unit 100 can perform a function of cutting an object.

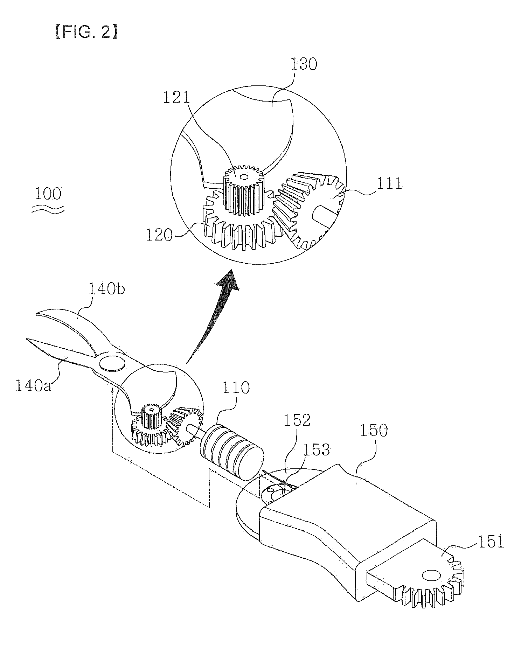

For a detailed description on the cutting unit 100, reference is now made to FIG. 2 of the appended figures.

FIG. 2 schematically shows a configuration of a cutting unit of the electrically-driven pruning shears according to the present invention.

The cutting unit 100 according to FIG. 2 of the appended figures can be configured to be driven through a cutting motor 110.

A cutting motor gear 111 is coupled with the cutting motor 110, and the cutting motor gear 111 can also be coupled with a cutting motor main coupling gear 120.

And the cutting motor main coupling gear 120 is coupled with a cutting motor auxiliary coupling gear 121 in a design that can enable the cutting motor auxiliary coupling gear to be engaged with a cutting shears gear 130.

Further, cutting shears 140, which consist in a male portion of shears 140a and a female portion of shears 140b, are formed at one end of the cutting shears gear 130, in which either one of the male portion of shears 140a and the female portion of shears 140b are formed in one entity with the cutting shears gear 130, while the other one can be fixed such that it cannot move.

At this point, it is described below in relation to the case 150 on where the one, which is fixed, of the male portion of shears 140a and the female portion of shears 140b is fixed.

The cutting motor gear 111 is rotated by the rotation of the cutting motor 110, and the cutting shears gear 130, which is engaged with the cutting motor auxiliary coupling gear 121, can be driven as the cutting motor main coupling gear 120 and the cutting motor auxiliary coupling gear 121, which are engaged with the cutting motor gear, rotate; in the meantime, one of the male portion of shears 140a and the female portion of shears 140b, which is formed in one entity with the cutting shears gear 130, branches off from the other, which is fixed, such that the object can be pruned.

Here, although FIG. 2 of the appended figures shows the cutting motor gear 111 and the cutting motor main coupling gear 120 in a bevel gear-like shape, a worm gear and a cam gear in other design conditions can be engaged in a combination such that the cutting shears 140 according to the present invention can be operated.

The cutting unit 100 can be configured to be housed in the case 150.

A cutting unit gear 151 can be arranged at one side of the case 150 and the cutting unit gear 151 can be connected to the tilting unit 200 such that the tilting unit 200 can be extended.

A fixing member 152, which can fix the cutting shears 140, can be formed on the other side of the case 150 where the cutting unit gear 151 is not formed.

An installation hole 153 for installing the cutting shears 140 therein can be formed on the fixing member 152.

Here, the cutting shears 140, which are fixed on the fixing member 152, refer to a portion, as explained above, of the male portion of shears 140a and the female portion of shears 140b which is not formed in one entity with the cutting shears gear 130.

Again, when referring to FIG. 2, one of the male portion of shears 140a and the female portion of shears 140b is installed in the installation hole 153 along the depicted dotted line, and can be fixed on the fixing member 152.

Then, the other one of the male portion of shears 140a and the female portion of shears 140b, which is not fixed and formed in one entity with the cutting shears gear 130, is inserted into the fixed one and operates such that the object can be pruned through gear operations.

Since the cutting shears 140 of the electrically-driven pruning shears 10 according to the present invention contains the cutting shears gear 130, the cutting shears can be attached to and removed from the fixing member 152 and the installation hole 153, which obtains an effect of replacing the cutting shears.

It is beneficial because different kinds of cutting shears can be selectively used according to thicknesses and kinds of the objects (such as twigs).

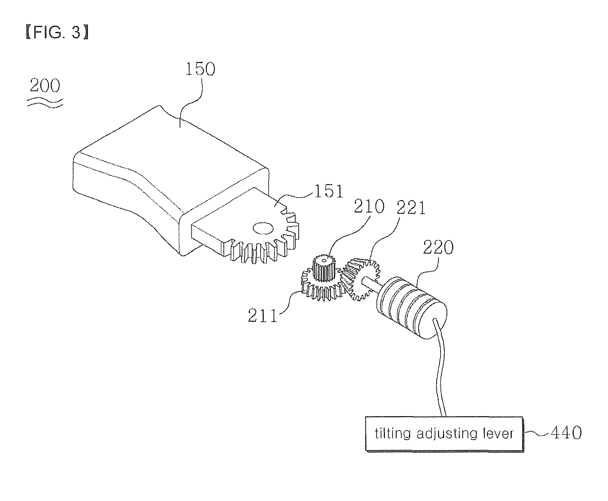

In the following, a configuration of the tilting unit 200 is described while referring to FIG. 3 of the appended figures.

FIG. 3 schematically shows a configuration of a tilting unit of the electrically-driven pruning shears according to the present invention.

According to FIG. 3 of the appended figures, the cutting unit main coupling gear 210 can be coupled and engaged with the cutting unit gear 151.

This cutting unit main coupling gear 210 can include a cutting unit auxiliary coupling gear 211, and the cutting unit auxiliary coupling gear 211 can be coupled and engaged with the tilting motor gear 221 which is coupled with the tilting motor 220.

Thus, the tilting unit 200 can be driven by the operation of the tilting motor 220, and the tilting motor 220 can be designed to be driven by a tilting control lever 440 which is to be described in the following.

Although the aforementioned tilting unit 200 is, as in the cutting unit 100, shown to be driven by the bevel gear in the figure, it can also be designed to be driven by a combination of a worm gear and a cam gear according to other design conditions.

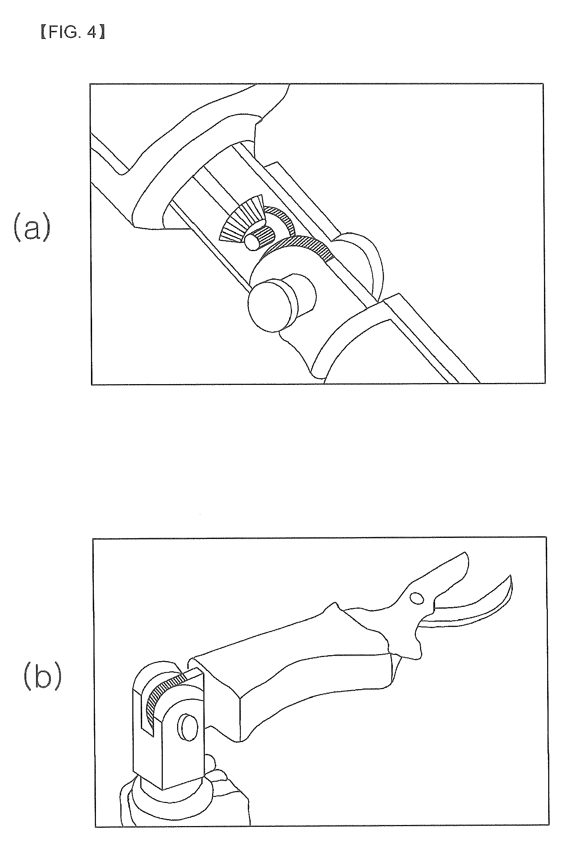

One example of the pruning shears 10 according to the present invention, which is tilted by this tilting unit 200, is to be explained while referring to FIG. 4 of the appended figures.

FIG. 4 shows an example of the operation of the tilting unit in the electrically-driven pruning shears according to the present invention, and shows an example in which the tilting unit 200 shown in FIG. 3 is assembled (top portion (a)), and another example in which the cutting shears are tilted by the tilting unit (bottom portion (b)).

In the figure, the tilting operation of the tilting unit 200 as shown in bottom portion (b) can be made by a user manipulating the tilting control lever 440 formed on the shaft 300, and, as shown in the figure, a quick tilting control is facilitated by controlling the tilting operation near the handle 320.

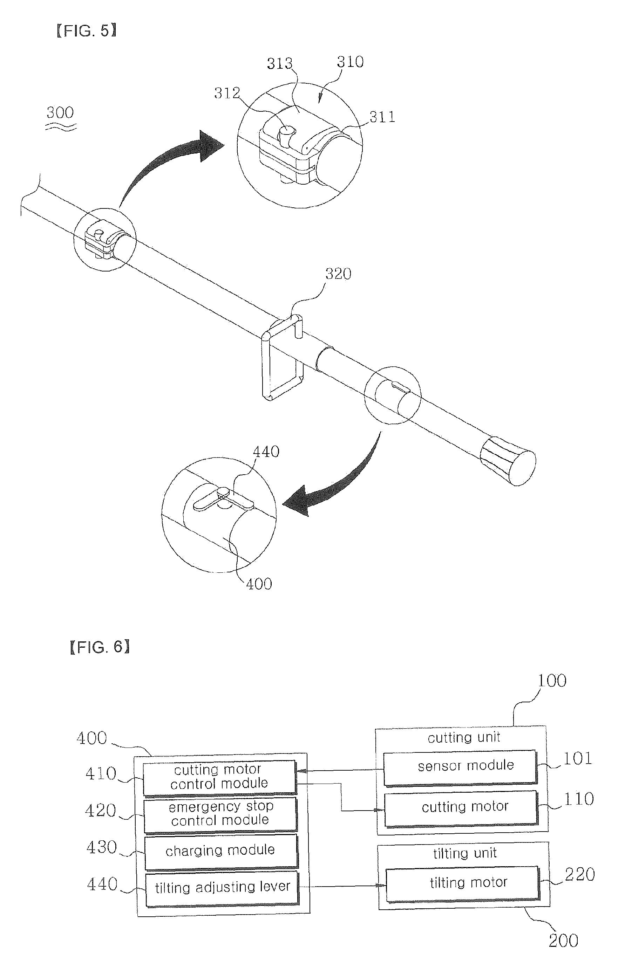

The shaft 300 is elongated in a length direction from the tilting unit 200 and can include the length adjusting means 310, the handle 320, and the control unit 400 having the tilting control lever 440 formed thereon as shown in FIG. 5 of the appended figures.

FIG. 5 schematically shows a configuration of a shaft of the electrically-driven pruning shears according to the present invention.

Prior to detailed description on the figure, the shaft 300 is made of a carbon fiber composite with a superb specific strength, in order to decrease a weight and increase durability of a product.

As shown in FIG. 5, the length adjusting means 310 can include a protrusion member 311, which encloses an outer surface of the shaft at one side thereof and has a pair of surfaces protruding in a vertical direction, a fastening axis 312, which penetrates the protrusion member 311 in the vertical direction, and a fastening member 313 which is connected to the fastening axis 312 and confines movement of the shaft 300 by fastening the shaft using the protrusion member 311.

And, the shaft 300 can be consist in a plurality of pipes with different diameters which are connected to one another in a telescopic (antenna) manner, such that a length of the shaft can be adjusted.

At this point, the length adjusting means 310 can be arranged in a direction toward the tilting unit 200 of the pipe with the largest diameter, while the tilting unit 200 can be arranged to be connected to (extended from) the pipe with the smallest diameter.

For example, when the shaft consists in a plurality of pipes A, B and C with different diameters, an outer diameter of the pipe A is arranged to be smaller than an inner diameter of the pipe B such that the pipe A is connected to the pipe B, and an outer diameter of the pipe B is arranged to be smaller than an inner diameter of the pipe C such that the pipe B is connected to the pipe C.

The length of the shaft can be adjusted to be 1) increased by allowing the pipe A to protrude from the pipe B and the pipe B from the pipe C, or 2) decreased by inserting the pipes with smaller diameters into the pipes with larger diameters, and, in the meantime, it is the length adjusting means 310 which confines or de-confines the movement of these respective pipes.

The handle 320 is formed on the other side of the shaft 300 and enables a user to grip the pruning shears 10 according to the present invention using his/her hand.

The tilting adjusting lever 440 can be formed on one side of the shaft 300 at a periphery of the handle 320.

This tilting adjusting lever 440 drives the tilting motor 220 and can be configured such that the tilting motor 220 is driven manually by the manipulation of the user or the tilting motor is driven automatically by the manipulation of the user.

First, when the tilting motor 220 is configured to be driven manually by the manipulation of the user on the tilting adjusting lever 440, the tilting motor 220 is arranged to be rotated by an angle of the manipulated tilting adjusting lever 440 to perform the tilting operation of the tilting unit 220.

Next, in the arrangement that the tilting motor 220 is configured to be driven automatically by the manipulation of the user on the tilting adjusting lever 440, when the user manipulates the tilting adjusting lever 440 as shown in FIG. 5, the tilting motor 220 is arranged to be rotated to perform the tilting operation of the tilting unit 220, and the tilting motor 220 can be configured to repeatedly rotate in a forward direction or a reverse direction for every predetermined period or angle.

As another example, the tilting motor 220 can be configured such that the rotation direction of the tilting motor is changed according to a manipulation direction of the tilting adjusting lever 440.

According to other design conditions, the tilting motor 220 can be configured to be driven in both automatic and manual manners.

In order to change an operation mode of the tilting motor 220, the mode can be switched to an automatic mode and a manual mode by the manipulation, and there can be provided a mode change switch (not shown in the figures) to accomplish the mode switching.

When the operation mode is switched from the automatic mode to the manual mode, the tilting motor 220 can be 1) driven by the angle of manipulation on the tilting adjusting lever 440 or 2) rotated as the tilting adjusting lever 440 is manipulated, by changing the circuit applied on the tilting motor 220.

The control unit 400 is configured at one side of the shaft 300 as described above, and can include a cutting motor control module 310, an emergency stop control module 320, a charging module 330, and a tilting control lever 440.

Now reference is made to FIG. 6 of the appended figures.

FIG. 6 schematically shows a configuration of a control unit of the electrically-driven pruning shears according to the present invention.

A transfer motor control module 410 performs a function of controlling a cutting motor 110.

As shown in FIG. 6, when the sensor module 101 provided in the cutting unit 100 outputs a predetermined sensing signal to the cutting motor control module 410, the cutting motor control module 410, which has received a sensing signal of the sensor module 101, can send the control signal to the cutting motor 110.

Here, the predetermined sensing signal can be a signal which senses a contact point of the male portion of shears 140a and the female portion of shears 140b of the cutting shears 140, and the sensor module 101 can consist of a sensor device (for example, a contact point sensor such as a magnetic sensor, etc.).

Thus, when the sensor module 101 senses that the male portion of shears 140a and the female portion of shears 140a are connected to each other and outputs a signal, the cutting motor control module 410 drives the cutting motor 110 such that the male portion of shears 140a and the female portion of shears 140b are repeatedly dis-engaged and engaged, and the male and female portions of shears can prune an object.

According to other design conditions, the sensor module 101 can be configured as an object detecting sensor for detecting objects such as twigs.

Thus, when an object is detected by the sensor module 101, the cutting motor is controlled by the cutting motor control module 410 such that the male portion of shears 140a and the female portion of shears 140b are engaged with and dis-engaged from each other and the object is pruned.

According to other design conditions, the cutting shears can be configured to adopt both a sensor device for sensing the aforementioned contact point and an object detecting sensor to perform the pruning operation.

In this case, the sensor device for detecting the contact point detects the engagement state of the male portion of shears 140a and the female portion of shears 140b and controls the cutting motor 110 to disengage the male portion of shears 140a from the female portion of shears 140b, and, when the object is detected by the object detecting sensor, the cutting motor 110 is controlled accordingly, such that the male portion of shears 140a and the female portion of shears 140b are engaged with each other.

The emergency stop control module 420 performs a function of controlling an emergency stop of the pruning shears 10 according to the present invention, and can be configured as a button formed on the shaft 300.

The charging module 430 can perform a function of charging electric power simultaneously while supplying the electric power to the pruning shears 10 according to the present invention such that the pruning shears are driven.

In the meantime, the charging module 430 can be configured to be separated from the control unit 400, and also can be configured to be connected to a wired charging device (not shown in the figures) to be charged.

Meanwhile, the present invention can further include a wearing portion 500 according to other embodiments.

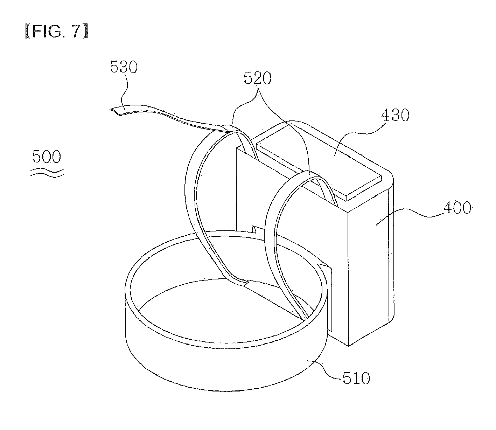

This is described by referring to FIG. 7 of the appended figures.

FIG. 7 schematically shows a configuration of a wearing portion of the electrically-driven pruning shears according to the present invention.

The wearing portion 500 enables the operator performing the pruning operation to perform the pruning operation more easily by wearing the electrically-driven pruning shears 10 according to the present invention on his/her body.

Here, when the wearing portion 500 is further included, the pruning shears 10 according to the present invention can be configured such that the control unit 400 can be connected to the wearing portion 500, and, in the meantime, the charging module 430 can be configured to be separated (disengaged) from the control unit 400.

This wearing portion 500 can include a wearing belt 510, wearing laces 520, and a shaft coupling lace 530.

The wearing belt 510 can be worn on a wrist of the user and can be connected to the control unit 400, and, in the meantime, the control unit 400 can be configured as shown in FIG. 7 such that the user can lean his/her back on it.

And the wearing laces 520 can be formed on the control unit 400 such that the user can wear the pruning shears 10 on both sides of his/her shoulder.

Also, a shaft coupling lace 530, which is connected to the shaft 300 of the pruning shears 10, can be configured on one of the wearing laces 520 which are configured to be worn on both sides of the shoulder.

Also, although it is not shown in the figures, a holding member, on which the wearing belt 510 can be held, can be further included on one front side of the wearing belt 510.

The holder member can be configured in a cylindrical shape with a hollow inner portion to which the pruning shears 10 are inserted, or in a C-like shape such that the pruning shears 10 are inserted therein.

Also, the holding member can be configured to be driven in up/down directions.

Thus, since the pruning operation can be performed (in an up direction) while the pruning shears 10 are held, the pruning operation can be performed more easily than when the pruning shears 10 are only gripped by hands, and the fatigue of the operator can be decreased.

On the other hand, since the operator can take a rest while the pruning shears 10 are held (in a down direction), incidents of lost pruning shears 10 can be prevented.

The electrically-driven pruning shears according to the present invention as described above can automatically perform a cutting operation of the cutting unit through a sensor and quickly perform a tilting operation of the tilting unit, and, therefore can mitigate the fatigue of the operator during the pruning operation.

Also, since the shaft is configured such that the length is adjustable, even when the operator's height is not sufficient, the operator can perform the pruning operation without separate tools such as ladders, and, therefore man power and fatigue required for the process can be reduced, and the overall pruning operation can be facilitated.

Meanwhile, the description with reference to FIGs. 1 to 7 has been made only on main items of the present invention, and various designs are possible without departing from the technical scope thereof, and, therefore, it is apparent that the present invention is not restricted to the configurations shown in FIGs. 1 to 7.

**Description on symbols**

| | | | |
|---|---|---|---|
| 10: | pruning shears | 100: | cutting unit |
| 101: | sensor module | 110: | cutting motor |
| 111: | cutting motor gear | 120: | cutting motor main coupling gear |
| 121: | cutting motor auxiliary coupling gear | | |
| 130: | cutting shears gear | | |
| 140: | cutting shears | 150: | case |
| 151: | cutting unit gear | 152: | fixing member |
| 153: | installation hole | 200: | tilting unit |
| 210: | cutting unit main coupling gear | | |
| 211: | cutting unit auxiliary coupling gear | | |
| 220: | tilting motor | 221: | tilting motor gear |
| 300: | shaft | 310: | length adjusting means |
| 320: | handle | 400: | control unit |
| 410: | cutting motor control module | | |
| 420: | emergency stop control module | | |
| 430: | charging module | 440: | tilting control lever |
| 500: | wearing portion | 510: | wearing belt |
| 520: | wearing lace | 530: | shaft coupling lace |

Electrically-driven pruning shears according to the present invention are characterized in comprising: a cutting unit 100 which automatically performs a cutting operation through a sensor module 101; a tilting unit 200 which is extended from the cutting unit and performs a tilting operation of the cutting unit according to a manipulation by a user; a shaft 300 which is extended from the tilting unit and on which a tilting control lever for controlling the tilting operation of the tilting unit is formed; and a control unit 400 which controls the cutting operation of the cutting unit and controls an emergency stop of the cutting unit, wherein, in the shaft 300, a plurality of pipe having diameters of different sizes are connected to each other in a telescopic manner, and a length of the shaft is adjusted by a length adjusting means 310.

## Claims

1. Electrically-driven pruning shears **characterized in** comprising:
a cutting unit 100 which automatically performs a cutting operation through a sensor module 101;
a tilting unit 200 which is extended from the cutting unit and performs a tilting operation of the cutting unit according to a manipulation by a user;
a shaft 300 which is extended from the tilting unit and on which a tilting control lever for controlling the tilting operation of the tilting unit is formed; and
a control unit 400 which controls the cutting operation of the cutting unit and controls an emergency stop of the cutting unit,
wherein, in the shaft 300, a plurality of pipe having diameters of different sizes are connected to with each other in a telescopic manner, and a length of the shaft is adjusted by a length adjusting means 310.

2. The electrically-driven pruning shears according to claim 1, **characterized in** further comprising a wearing portion 500 which can be worn on a user,
wherein the wearing portion 500 includes:
a wearing belt 510 which is worn around a waist of the user;
wearing laces 520 which are worn on both sides of a shoulder of the user; and
a shaft coupling lace 530 which is formed on the wearing laces 520 and is connected to the shaft 300.

3. The electrically-driven pruning shears according to one of claim 1 and claim 2,
wherein the control unit 400 is **characterized in** including:
a cutting motor control module 410 which is formed on a selected one of the shaft 300 and wearing portion 500, receives a sensing signal from the sensor module 101, and sends a control signal to a cutting motor 110;
an emergency stop control module 420 which controls the cutting motor 110 to be guided to an emergency stop; and
a charging module 430 which can be attached to and detached from the control unit 400, and charges and supplies electric power.

4. The electrically-driven pruning shears according to claim 1, **characterized in that**:
the cutting unit 100 includes:
a cutting motor 110 which is coupled with a cutting motor gear 111 to deliver operational power;
a cutting motor main coupling gear 120 which is coupled and engaged with the cutting motor gear 111;
a cutting motor auxiliary coupling gear 121 which is coupled with the cutting motor main coupling gear 120 to rotate with the cutting motor main coupling gear 120;
a cutting shears gear 130 which is coupled and engaged with the cutting motor auxiliary coupling gear 121;
cutting shears 140 which consist in a male portion of shears 140a and a female portion of shears 140b; and
a case 150 housing the cutting unit 100 therein,
wherein, the case 150 includes:
a cutting unit gear 151 which is connected to the tilting unit 200, on one side thereof; and
a fixing member 152 having an installation hole 153, on the other side thereof, and
in the cutting shears 140, one of the male portion of shears 140a and the female portion of shears 140b is formed with the cutting shears gear 130 in one entity, while the other is immovably fixed on the fixing member 152.

5. The electrically-driven pruning shears according to claim 1, **characterized in that** the tilting unit 200 includes:
a cutting unit main coupling gear 210 which is coupled with the cutting unit 100 and includes a cutting unit auxiliary coupling gear 211; and
a tilting motor 220 which is coupled with a tilting motor gear 221 which is coupled and engaged with the cutting unit auxiliary coupling gear 211,
wherein the tilting motor 220 is driven automatically and manually according to a manipulation of the tilting control lever.
